# EUROPEAN PATENT APPLICATION

(11) **EP 4 129 732 A1**
(43) Date of publication of application: **08.02.2023**
(21) Application number: 21854610.9
(22) Date of filing: 30.07.2021
(51) Int. Cl.: B60K 17/02, B60K 17/04, B60K 6/36, B60K 6/38, B60K 6/387, B60K 6/40, B60K 6/48, B60K 6/50, B60K 6/54

(54) **VEHICULAR DRIVE DEVICE**

(30) Priority: 03.08.2020 JP 2020131743; 30.09.2020 JP 2020165066
(71) Applicant: AISIN CORPORATION, Aichi 448-8650 (JP)
(72) Inventor: ESAKI Norito, Kariya-shi, Aichi 448-8650 (JP); SEKI Yuichi, Kariya-shi, Aichi 448-8650 (JP)
(74) Representative: Kramer Barske Schmidtchen Patentanwälte PartG mbB
(86) International application number: PCT/JP2021/028393
(87) International publication number: WO 2022/030396

(57) **Abstract**

A vehicle drive device (100) includes a first bearing (B1) that supports a second rotary member (RT2) on a first rotary member (RT1) so that the second rotary member (RT2) is rotatable relative to the first rotary member (RT1), and a second bearing (B2) that supports the first rotary member (RT1) on a case (4) so that the first rotary member (RT1) is rotatable relative to the case (4). The first rotary member (RT1) has a support outer peripheral surface (11a) that faces an outer side (R2) in a radial direction, and a first radial support surface (13a) that faces one side in the radial direction (R). The second rotary member (RT2) has a support inner peripheral surface (51a) that faces an inner side (R1) in the radial direction. A support (41) of the case (4) has a second radial support surface (41a) that faces the first radial support surface (13a). The first bearing (B1) is arranged between the support outer peripheral surface (11a) and the support inner peripheral surface (51a). The second bearing (B2) is arranged between the radial support surfaces (13a, 41a). The first bearing (B1) is arranged on the inner side (R1) in the radial direction with respect to a rotor (Ro) at a position where the first bearing (B 1) overlaps the rotor (Ro) in a radial view.

## Description

### TECHNICAL FIELD

The present invention relates to a vehicle drive device including an input member drivingly connected to an internal combustion engine, an output member drivingly connected to wheels, a rotary electric machine that functions as a driving force source for the wheels, a transmission that changes the speed of rotation transmitted from the rotary electric machine side and transmits the rotation to the output member side, and a case that houses the rotary electric machine and the transmission.

### BACKGROUND ART

An example of such a vehicle drive device is disclosed in Patent Document 1 below. In the following descriptions of "Background Art" and "Problem to be Solved by the Invention", reference numerals in Patent Document 1 are quoted in parentheses.

The vehicle drive device of Patent Document 1 includes a first bearing (51) that supports a rotor support member (3) that supports a rotor (Ro) of a rotary electric machine (MG) so that the rotor support member (3) is rotatable relative to a case (2), and a second bearing (53) that supports an input member (I) so that the input member (I) is rotatable relative to the case (2). Each of these bearings (51, 53) is directly supported on the case (2).

### Related Art Documents

### Patent Documents

Patent Document 1: WO 2019/187597 (FIG. 4)

### SUMMARY OF THE INVENTION

### Problem to be Solved by the Invention

In the above configuration, portions of the case (2) for supporting the two bearings (51, 53) are arranged side by side in a radial direction (R). Therefore, the size of the vehicle drive device in the radial direction (R) tends to increase.

In view of the above, it is desirable to realize a vehicle drive device whose radial dimension can be reduced easily.

### Means for Solving the Problem

As the characteristic configuration of the vehicle drive device in view of the above, the vehicle drive device includes:
an input member drivingly connected to an internal combustion engine;
an output member drivingly connected to a wheel;
a rotary electric machine including a rotor and functioning as a driving force source for the wheel;
a transmission configured to change a speed of rotation transmitted from the rotary electric machine side and transmit the rotation to the output member side; and
a case that houses the rotary electric machine and the transmission, in which
the input member or a member that rotates integrally with the input member is defined as a first rotary member, and the rotor or a member that rotates integrally with the rotor is defined as a second rotary member,
the vehicle drive device includes:
   a first bearing that supports the second rotary member on the first rotary member so that the second rotary member rotates relative to the first rotary member; and
a second bearing that supports the first rotary member on the case so that the first rotary member rotates relative to the case,
the case includes a support that supports the second bearing,
the first rotary member has a support outer peripheral surface that faces an outer side in a radial direction, and a first radial support surface that faces one side in the radial direction,
the second rotary member has a support inner peripheral surface that faces an inner side in the radial direction,
the support has a second radial support surface that faces the first radial support surface in the radial direction,
the first bearing is arranged between the support outer peripheral surface and the support inner peripheral surface in the radial direction,
the second bearing is arranged between the first radial support surface and the second radial support surface in the radial direction, and
the first bearing is arranged on the inner side in the radial direction with respect to the rotor at a position where the first bearing overlaps the rotor in a radial view along the radial direction.

According to this characteristic configuration, the second rotary member is supported so as to be rotatable relative to the case via the first bearing, the first rotary member, and the second bearing. Therefore, the second radial support surface for supporting the second bearing is formed on the case, whereas a surface for supporting the first bearing is not formed on the case. The support outer peripheral surface for supporting the first bearing is formed on the first rotary member. Thus, it is possible to avoid a configuration in which a portion for supporting the first bearing and a portion for supporting the second bearing are arranged side by side in the radial direction on the case. As a result, it is easy to reduce the radial dimension of the vehicle drive device.

### BRIEF DESCRIPTION OF THE DRAWINGS

[FIG. 1] FIG. 1 is a schematic view showing a schematic configuration of a vehicle drive device according to a first embodiment.
[FIG. 2] FIG. 2 is a partial sectional view of the vehicle drive device according to the first embodiment.
[FIG. 3] FIG. 3 is a partially enlarged sectional view of the vehicle drive device according to the first embodiment.
[FIG. 4] FIG. 4 is a partial sectional view of a vehicle drive device according to a second embodiment.
[FIG. 5] FIG. 5 is a partially enlarged sectional view of the vehicle drive device according to the second embodiment.
[FIG. 6] FIG. 6 is a partial sectional view of a vehicle drive device according to another embodiment.

### MODES FOR CARRYING OUT THE INVENTION

### 1. First Embodiment

Hereinafter, a vehicle drive device 100 according to an embodiment will be described with reference to the drawings. The vehicle drive device 100 according to the present embodiment is mountable on an FF (front engine-front drive) vehicle.

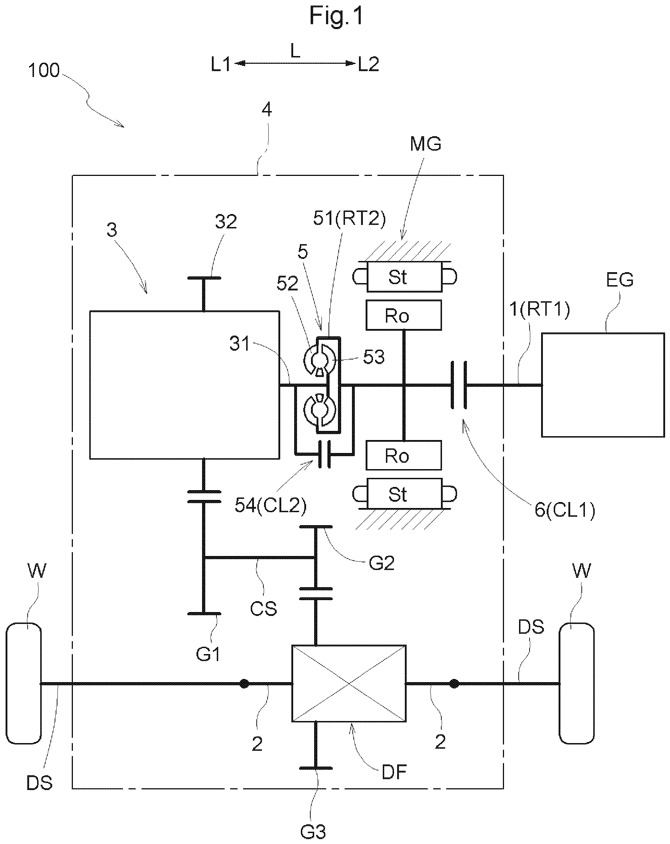

As shown in FIG. 1, the vehicle drive device 100 is a device for driving a vehicle (hybrid vehicle) using either one or both of an internal combustion engine EG and a rotary electric machine MG as a driving force source for wheels W. That is, the vehicle drive device 100 is structured as a drive device for a so-called one-motor parallel hybrid vehicle.

In the following description, unless otherwise specified, an "axial direction L", a "radial direction R", and a "circumferential direction" are defined with reference to a rotation axis of the rotary electric machine MG. In the axial direction L, the side where the rotary electric machine MG is arranged with respect to the internal combustion engine EG will be referred to as "first side L1 in axial direction", and the opposite side will be referred to as "second side L2 in axial direction". In the radial direction R, the rotation axis side of the rotary electric machine MG will be referred to as "inner side R1 in radial direction", and the opposite side will be referred to as "outer side R2 in radial direction". The direction of each member represents a direction of the member that is assembled to the vehicle drive device 100. In addition, terms related to the direction, the position, and the like of each member represent concepts that include a state in which there is a difference due to an error that is allowed in manufacturing.

The rotary electric machine MG functions as a driving force source for the wheels W. The rotary electric machine MG includes a stator St and a rotor Ro. The rotary electric machine MG has a function as a motor (electric motor) that receives supply of electric power to generate driving force, and a function as a generator (electric power generator) that receives supply of driving force to generate electric power. Therefore, the rotary electric machine MG is electrically connected to a power storage device (battery, capacitor, and the like). The rotary electric machine MG receives electric power supplied from the power storage device to perform power running, or supplies electric power generated with torque of the internal combustion engine EG or inertial force of the vehicle to the power storage device to cause the power storage device to store the electric power.

The internal combustion engine EG functions as a driving force source for the wheels W, similarly to the rotary electric machine MG. The internal combustion engine EG is a motor (gasoline engine, diesel engine, and the like) that is driven by combustion of fuel to take out driving force.

As shown in FIG. 1, the vehicle drive device 100 includes an input member 1, output members 2, a transmission 3, and a case 4 in addition to the rotary electric machine MG. In the present embodiment, the vehicle drive device 100 further includes a fluid coupling 5, a disconnecting engagement device 6, a counter gear mechanism CG, and a differential gear mechanism DF.

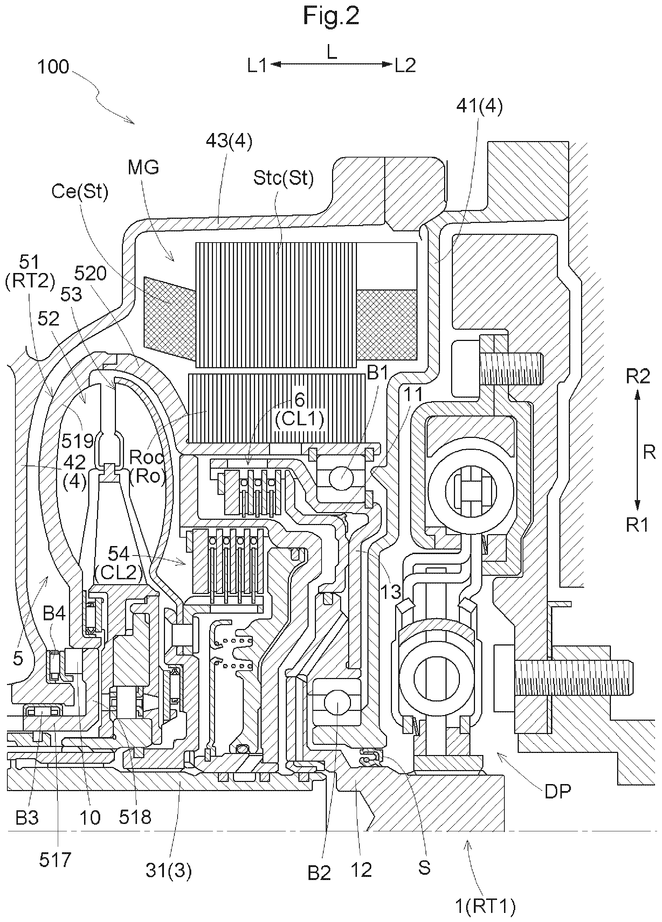

The input member 1 is drivingly connected to the internal combustion engine EG. In the present embodiment, the input member 1 is drivingly connected to an output shaft of the internal combustion engine EG via a damper device DP (see FIG. 2) that damps fluctuation in transmitted torque.

In the present application, "drivingly connected" refers to a state in which two rotation elements are connected so that a driving force can be transmitted, and includes a state in which the two rotation elements are connected so as to rotate integrally or a state in which the two rotation elements are connected so as to be able to transmit a driving force via one or two or more transmitting members. Such transmitting members include various members that transmit rotation at the same speed or at a changed speed, such as a shaft, a gear mechanism, a belt, and a chain. The transmitting members may include an engagement device that selectively transmits rotation and driving force, such as a friction engagement device and an intermeshing engagement device.

The disconnecting engagement device 6 is arranged in a power transmission path between the input member 1 and the rotary electric machine MG. The disconnecting engagement device 6 corresponds to a "first engagement device CL1" that connects or disconnects power transmission between the input member 1 and the rotary electric machine MG.

The transmission 3 changes the speed of rotation transmitted from the rotary electric machine MG side and transmits the rotation to the output member 2 side. In the present embodiment, the transmission 3 includes a transmission input shaft 31 serving as an input element of the transmission 3, and a transmission output gear 32 serving as an output element of the transmission 3. As the transmission 3, various known automatic transmissions are used, such as a stepped automatic transmission capable of switching a plurality of shift speeds, and a continuously variable automatic transmission capable of steplessly changing the speed ratio.

The fluid coupling 5 is arranged in a power transmission path between the rotary electric machine MG and the transmission 3. The fluid coupling 5 includes a rotary housing 51. In the present embodiment, the fluid coupling 5 is a torque converter including a pump impeller 52, a turbine runner 53, and a lockup clutch 54 in addition to the rotary housing 51.

The rotary housing 51 is connected to the rotor Ro of the rotary electric machine MG so as to rotate integrally with the rotor Ro. The rotary housing 51 houses the pump impeller 52 and the turbine runner 53. The pump impeller 52 and the turbine runner 53 are arranged so as to face each other in the axial direction L. In the present embodiment, the pump impeller 52 is arranged so as to face the turbine runner 53 on the first side L1 in the axial direction. The pump impeller 52 and the turbine runner 53 are supported so as to rotate relative to each other. The pump impeller 52 is connected to the rotary housing 51 so as to rotate integrally with the rotary housing 51. The turbine runner 53 is connected to the transmission input shaft 31 of the transmission 3 so as to rotate integrally with the transmission input shaft 31.

The lockup clutch 54 is configured to selectively set the pump impeller 52 and the turbine runner 53 in a direct connection engaged state. That is, the lockup clutch 54 is configured to switch a state in which the rotary housing 51 that rotates integrally with the rotor Ro of the rotary electric machine MG is brought into direct connection engagement with the transmission input shaft 31 of the transmission 3 and a state in which power is transmitted via a fluid between the pump impeller 52 and the turbine runner 53. Thus, the lockup clutch 54 corresponds to a "second engagement device CL2" that connects or disconnects power transmission between the rotary electric machine MG and the transmission 3.

The counter gear mechanism CG includes a counter input gear G1 serving as an input element of the counter gear mechanism CG, and a counter output gear G2 serving as an output element of the counter gear mechanism CG. The counter input gear G1 meshes with the transmission output gear 32 of the transmission 3. The counter output gear G2 is connected to the counter input gear G1 so as to rotate integrally with the counter input gear G1. In the present embodiment, the counter input gear G1 and the counter output gear G2 are connected so as to rotate integrally via a counter shaft CS extending along the axial direction L.

The differential gear mechanism DF includes a differential input gear G3 that meshes with the counter output gear G2 of the counter gear mechanism CG. The differential gear mechanism DF distributes the rotation of the differential input gear G3 serving as an input element of the differential gear mechanism DF to the pair of output members 2.

The output members 2 are drivingly connected to the wheels W. In the present embodiment, each of the pair of output members 2 is drivingly connected to the wheel W via a drive shaft DS.

The case 4 houses the rotary electric machine MG and the transmission 3. In the present embodiment, the case 4 also houses the fluid coupling 5, the disconnecting engagement device 6, the counter gear mechanism CG, and the differential gear mechanism DF.

As shown in FIG. 2, the stator St of the rotary electric machine MG includes a stator core Stc fixed to a non-rotary member (in this case, the case 4). The rotor Ro of the rotary electric machine MG includes a rotor core Roc that rotates relative to the stator St.

In the present embodiment, the rotary electric machine MG is an inner rotor-type rotary electric machine. Therefore, the rotor core Roc is arranged on the inner side R1 in the radial direction with respect to the stator core Stc.

In the present embodiment, the rotary electric machine MG is a revolving field-type rotary electric machine. Therefore, a stator coil is wound around the stator core Stc such that coil end portions Ce are formed so as to protrude from the stator core Stc to both sides in the axial direction L (first side L1 in the axial direction and second side L2 in the axial direction). The rotor core Roc includes permanent magnets (not shown).

As shown in FIG. 2, the vehicle drive device 100 includes a first bearing B1 that supports a second rotary member RT2 on a first rotary member RT1 so that the second rotary member RT2 rotates relative to the first rotary member RT1, and a second bearing B2 that supports the first rotary member RT1 on the case 4 so that the first rotary member RT1 rotates relative to the case 4.

The first rotary member RT1 is the input member 1 or a member that rotates integrally with the input member 1. In the present embodiment, the first rotary member RT1 is the input member 1.

The second rotary member RT2 is the rotor Ro or a member that rotates integrally with the rotor Ro. In the present embodiment, the second rotary member RT2 is the rotary housing 51 of the fluid coupling 5 or a member that rotates integrally with the rotary housing 51. In this example, the second rotary member RT2 is the rotary housing 51.

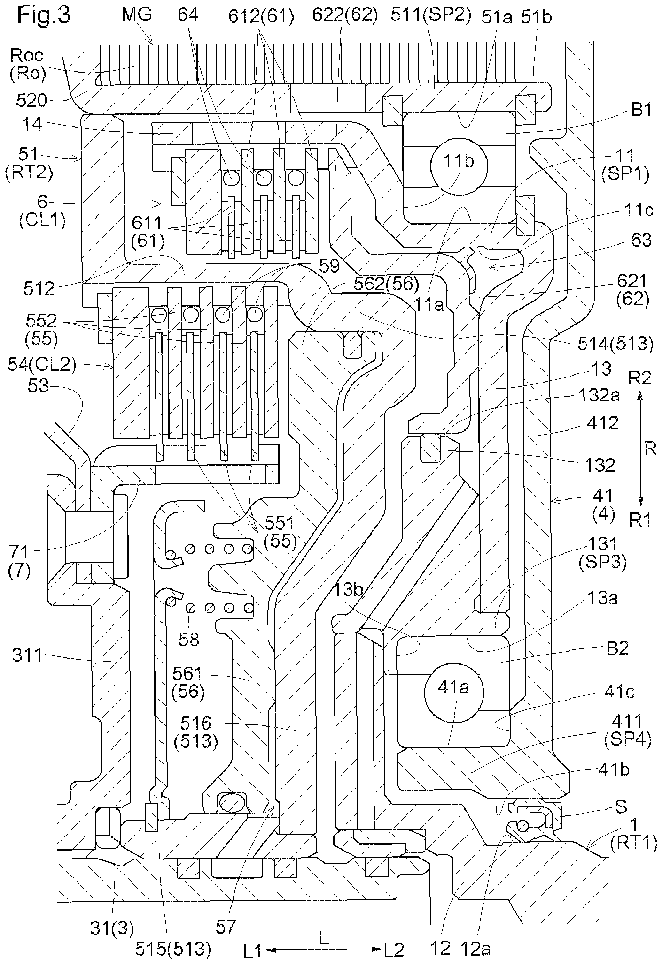

As shown in FIG. 3, the input member 1 has a support outer peripheral surface 11a that faces the outer side R2 in the radial direction, and a first radial support surface 13a that faces one side in the radial direction R. The rotary housing 51 has a support inner peripheral surface 51a that faces the inner side R1 in the radial direction. In the present embodiment, the rotary housing 51 further has a rotor support surface 51b that faces the outer side R2 in the radial direction. The rotor support surface 51b is formed so as to support the rotor Ro of the rotary electric machine MG from the inner side R1 in the radial direction. That is, the rotor support surface 51b is formed in contact with the inner peripheral surface of the rotor Ro.

The case 4 includes a first support 41. The first support 41 is a "support" that supports the second bearing B2. The first support 41 has a second radial support surface 41a that faces the first radial support surface 13a in the radial direction R.

The first bearing B1 is arranged between the support outer peripheral surface 11a and the support inner peripheral surface 51a in the radial direction R. In the present embodiment, the first bearing B1 is arranged such that the inner peripheral surface of the first bearing B1 is in contact with the support outer peripheral surface 11a and the outer peripheral surface of the first bearing B1 is in contact with the support inner peripheral surface 51a. In the present embodiment, the first bearing B1 is a radial bearing that supports the rotary housing 51 on the input member 1 in the radial direction R. In this example, the first bearing B1 is a radial ball bearing.

The second bearing B2 is arranged between the first radial support surface 13a and the second radial support surface 41a in the radial direction R. In the present embodiment, the second bearing B2 is arranged such that the outer peripheral surface of the second bearing B2 is in contact with the first radial support surface 13a and the inner peripheral surface of the second bearing B2 is in contact with the second radial support surface 41a. In the present embodiment, the second bearing B2 is a radial bearing that supports the input member 1 on the case 4 in the radial direction R. In this example, the second bearing B2 is a radial ball bearing.

The first bearing B1 is arranged on the inner side R1 in the radial direction with respect to the rotor Ro of the rotary electric machine MG at a position where the first bearing B1 overlaps the rotor Ro in a radial view along the radial direction R. In the present embodiment, both the first bearing B 1 and the second bearing B2 are arranged on the inner side R1 in the radial direction with respect to the rotor Ro of the rotary electric machine MG at positions where the first bearing B1 and the second bearing B2 overlap the rotor Ro in the radial view.

In the present embodiment, the first bearing B1 and the second bearing B2 are arranged so as to overlap each other in the radial view along the radial direction R. It is preferable that more than a half of the area of the first bearing B 1 in the axial direction L overlap the second bearing B2 in the radial view and more than a half of the area of the second bearing B2 in the axial direction L overlap the first bearing B 1 in the radial view. In this example, three-fourths or more of the areas of the first bearing B1 and the second bearing B2 in the axial direction L overlap each other in the radial view. In the illustrated example, the dimension of the first bearing B1 in the axial direction L is substantially equal to the dimension of the second bearing B2 in the axial direction L. In the present embodiment, the first bearing B 1 is arranged on the outer side R2 in the radial direction with respect to the second bearing B2 at a position where the first bearing B 1 overlaps the second bearing B2 in the radial view along the radial direction R. Regarding the arrangement of two elements, the phrase "overlap when viewed in a specific direction" means that, when a virtual straight line parallel to the line-of-sight direction is moved in directions orthogonal to the virtual straight line, an area where the virtual straight line intersects both the two elements is present at least in part.

According to this configuration, the dimension of the vehicle drive device 100 in the axial direction L can be reduced compared to a configuration in which the first bearing B1 and the second bearing B2 are arranged side by side in the axial direction L.

In the present embodiment, both the first bearing B 1 and the second bearing B2 are arranged on the inner side R1 in the radial direction with respect to the rotary electric machine MG at the positions where the first bearing B 1 and the second bearing B2 overlap the rotary electric machine MG in the radial view along the radial direction R. In this example, the range of overlap with the rotary electric machine MG in the radial view is a range in the axial direction L from the end on the first side L1 in the axial direction to the end on the second side L2 in the axial direction in the stator St including the coil end portions Ce (see FIG. 2).

According to this configuration, the dimension of the vehicle drive device 100 in the axial direction L can be reduced compared to a configuration in which at least one of the first bearing B 1 and the second bearing B2 is arranged on one side in the axial direction L with respect to the rotary electric machine MG.

Further, in this example, both the first bearing B1 and the second bearing B2 are arranged at the positions where the first bearing B 1 and the second bearing B2 overlap the rotor Ro in the radial view along the radial direction R. In this example, the range of overlap with the rotor Ro in the radial view is a range in the axial direction L from the end on the first side L1 in the axial direction to the end on the second side L2 in the axial direction in the rotor Ro (in this case, the rotor core Roc).

According to this configuration, the dimension of the vehicle drive device 100 in the axial direction L can be reduced compared to a configuration in which at least one of the first bearing B 1 and the second bearing B2 is arranged on one side in the axial direction L with respect to the rotor Ro of the rotary electric machine MG.

In the present embodiment, the first radial support surface 13a is formed so as to face the inner side R1 in the radial direction.

The second radial support surface 41a is formed so as to face the outer side R2 in the radial direction.

According to this configuration, a space for arranging a member between the first rotary member RT1 and the first support 41 in the radial direction R can easily be secured on the inner side R1 in the radial direction with respect to the second radial support surface 41a of the first support 41 in the case 4. That is, the configuration is such that the member to be arranged between the first rotary member RT1 and the first support 41 in the radial direction R can easily be arranged on one side in the radial direction R with respect to the first bearing B1 and the second bearing B2. As a result, the dimension of the vehicle drive device 100 in the axial direction L can easily be reduced even in a case where a predetermined member is arranged between the first rotary member RT1 and the first support 41 in the radial direction R.

In the present embodiment, as shown in FIG. 2, the vehicle drive device 100 includes a third bearing B3 and a fourth bearing B4 that support the rotary housing 51 so that the rotary housing 51 is rotatable relative to the case 4.

The third bearing B3 is a radial bearing that supports the rotary housing 51 on the case 4 in the radial direction R. In the present embodiment, the third bearing B3 supports an axially extending portion 517 of the rotary housing 51 on a second support 42 of the case 4 in the radial direction R. In this example, the third bearing B3 is a radial roller bearing.

The axially extending portion 517 has a tubular shape having an axis along the axial direction L. The axially extending portion 517 is arranged so as to cover the transmission input shaft 31 on the outer side R2 in the radial direction. The third bearing B3 is movable in the axial direction L relative to at least one of the axially extending portion 517 and the second support 42. As a result, the axially extending portion 517 is allowed to move in the axial direction L even if the dimension of the rotary housing 51 in the axial direction L varies due to, for example, expansion (so-called ballooning) of the rotary housing 51 caused by a hydraulic pressure inside the rotary housing 51.

The fourth bearing B4 is a thrust bearing that supports the rotary housing 51 on the case 4 in the axial direction L. In the present embodiment, the fourth bearing B4 supports a radially extending portion 518 of the rotary housing 51 on the second support 42 of the case 4 in the axial direction L. In this example, the fourth bearing B4 is a thrust roller bearing.

The radially extending portion 518 extends along the radial direction R so as to connect the axially extending portion 517 and a pump housing portion 519 that surrounds an outer side of the pump impeller 52 in the rotary housing 51. In the present embodiment, the radially extending portion 518 is formed so as to connect the end of the pump housing portion 519 on the inner side R1 in the radial direction and the end of the axially extending portion 517 on the second side L2 in the axial direction.

In the present embodiment, the first bearing B1 and the second bearing B2 are arranged on the second side L2 in the axial direction with respect to the pump impeller 52 and the turbine runner 53 of the fluid coupling 5. The third bearing B3 and the fourth bearing B4 are arranged on the first side L1 in the axial direction with respect to the pump impeller 52 and the turbine runner 53 of the fluid coupling 5. As described above, in the present embodiment, each of the first bearing B1, the second bearing B2, and the third bearing B3 is the radial bearing. Therefore, in the present embodiment, the rotary housing 51 is supported on the case 4 in the radial direction R via the two bearings B1 and B2 on the second side L2 in the axial direction with respect to the pump impeller 52 and the turbine runner 53, and is supported on the case 4 in the radial direction R via the one bearing B3 on the first side L1 in the axial direction with respect to the pump impeller 52 and the turbine runner 53. Thus, in the present embodiment, the rotary housing 51 can be supported on the case 4 in the radial direction R with high support accuracy.

In the present embodiment, an elastic member 10 having elasticity in the axial direction L is provided between the fourth bearing B4 and the radially extending portion 518 in the axial direction L. As the elastic member 10, various elastic members can be used, such as a compression coil spring, a disc spring, and a washer made of rubber or synthetic resin. When the elastic member 10 is elastically deformed in the axial direction L, the radially extending portion 518 is allowed to move in the axial direction L even if the dimension of the rotary housing 51 in the axial direction L varies due to, for example, expansion (so-called ballooning) of the rotary housing 51 caused by the hydraulic pressure inside the rotary housing 51. That is, the radially extending portion 518 is allowed to move in the axial direction L while being supported in the axial direction L by the fourth bearing B4 and the elastic member 10. Instead of arranging the elastic member 10 between the fourth bearing B4 and the radially extending portion 518 in the axial direction L, the elastic member 10 may be arranged between the fourth bearing B4 and the second support 42 of the case 4 in the axial direction L.

As shown in FIG. 3, in the present embodiment, the vehicle drive device 100 further includes a seal member S that seals the space between the input member 1 and the first support 41 in an oil-tight manner.

In the present embodiment, the input member 1 has a sealing outer peripheral surface 12a that faces the outer side R2 in the radial direction. In the present embodiment, the first support 41 has a sealing inner peripheral surface 41b that faces the inner side R1 in the radial direction. The seal member S is arranged between the sealing outer peripheral surface 12a and the sealing inner peripheral surface 41b in the radial direction R. In the present embodiment, the seal member S is arranged on the inner side R1 in the radial direction with respect to the second bearing B2.

Thus, in the present embodiment, the vehicle drive device 100 further includes the seal member S that seals the space between the first rotary member RT1 (in this case, the input member 1) and the first support 41 in an oil-tight manner.

The first rotary member RT1 has the sealing outer peripheral surface 12a that faces the outer side R2 in the radial direction.

The first support 41 has the sealing inner peripheral surface 41b that faces the inner side R1 in the radial direction.

The seal member S is arranged between the sealing outer peripheral surface 12a and the sealing inner peripheral surface 41b in the radial direction R.

With this configuration, it is possible to appropriately avoid outflow of oil from the space between the first rotary member RT1 and the first support 41. With this configuration in the present embodiment, the seal member S can be arranged on one side in the radial direction R (in this case, the inner side R1 in the radial direction) with respect to the first bearing B1 and the second bearing B2. As a result, the dimension of the vehicle drive device 100 in the axial direction L can easily be reduced even in the configuration in which the seal member S is arranged between the first rotary member RT1 and the first support 41 in the radial direction R.

In the present embodiment, the input member 1 includes an outer tubular portion 11, an inner tubular portion 12, and a connecting portion 13. The outer tubular portion 11 has a tubular shape having an axis along the axial direction L. The inner tubular portion 12 has a tubular shape having an axis along the axial direction L. The inner tubular portion 12 is arranged on the inner side R1 in the radial direction with respect to the outer tubular portion 11. The connecting portion 13 is formed so as to extend along the radial direction R. The connecting portion 13 is formed so as to connect the outer tubular portion 11 and the inner tubular portion 12. In the illustrated example, the outer tubular portion 11 is formed so as to extend to the first side L1 in the axial direction from the end of the connecting portion 13 on the outer side R2 in the radial direction. The inner tubular portion 12 is formed so as to extend to the second side L2 in the axial direction from the end of the connecting portion 13 on the inner side R1 in the radial direction.

In the present embodiment, the support outer peripheral surface 11a is formed on the outer peripheral surface of the outer tubular portion 11. The sealing outer peripheral surface 12a is formed on the outer peripheral surface of the inner tubular portion 12. The connecting portion 13 has a stepped surface that faces the inner side R1 in the radial direction, and this stepped surface is the first radial support surface 13a. Specifically, the connecting portion 13 includes a first step portion 131 that forms the first radial support surface 13a serving as the stepped surface that faces the inner side R1 in the radial direction. In the illustrated example, the first step portion 131 is formed so as to bend to the second side L2 in the axial direction from a portion of the connecting portion 13 on the inner side R1 in the radial direction with respect to the first step portion 131 and bend to the first side L1 in the axial direction from a portion of the connecting portion 13 on the outer side R2 in the radial direction with respect to the first step portion 131. The inner peripheral surface of the portion extending in the axial direction L in the first step portion 131 is the first radial support surface 13a serving as the stepped surface.

As described above, in the present embodiment, the first rotary member RT1 (in this case, the input member 1) includes the outer tubular portion 11 having the tubular shape having the axis along the axial direction L, the inner tubular portion 12 having the tubular shape having the axis along the axial direction L and arranged on the inner side R1 in the radial direction with respect to the outer tubular portion 11, and the connecting portion 13 that extends along the radial direction R and connects the outer tubular portion 11 and the inner tubular portion 12.

The support outer peripheral surface 11a is formed on the outer peripheral surface of the outer tubular portion 11.

The sealing outer peripheral surface 12a is formed on the outer peripheral surface of the inner tubular portion 12.

The connecting portion 13 has the stepped surface that faces the inner side R1 in the radial direction.

The stepped surface is the first radial support surface 13a.

According to this configuration, the support outer peripheral surface 11a, the first radial support surface 13a, and the sealing outer peripheral surface 12a can appropriately be formed on the first rotary member RT1.

In the present embodiment, as shown in FIG. 2, the case 4 includes the second support 42 and a tubular body 43 in addition to the first support 41 described above. The tubular body 43 has a tubular shape having an axis along the axial direction L. Each of the first support 41 and the second support 42 is formed so as to extend along the radial direction R. The first support 41 and the second support 42 are arranged apart from each other in the axial direction L. In the present embodiment, the second support 42 is arranged on the first side L1 in the axial direction with respect to the first support 41. The first support 41 and the second support 42 are connected to the tubular body 43 so as to extend to the inner side R1 in the radial direction from the tubular body 43. In the present embodiment, the rotary electric machine MG, the fluid coupling 5, and the disconnecting engagement device 6 are arranged in a space surrounded by the first support 41, the second support 42, and the tubular body 43.

As shown in FIG. 3, in the present embodiment, the first support 41 includes a tubular support portion 411 having a tubular shape having an axis along the axial direction L, and a radially extending portion 412 extending to the outer side R2 in the radial direction from the tubular support portion 411. In the present embodiment, the tubular support portion 411 is formed so as to cover the inner tubular portion 12 of the input member 1 on the outer side R2 in the radial direction. The radially extending portion 412 extends along the radial direction R so as to connect the tubular support portion 411 and the tubular body 43. In the present embodiment, the radially extending portion 412 and the connecting portion 13 of the input member 1 are arranged side by side in the axial direction L. In this case, the radially extending portion 412 and the connecting portion 13 are arranged so as to face each other in the axial direction L in a state in which no other member is interposed therebetween in the axial direction L. In the illustrated example, the radially extending portion 412 is arranged to adjoin the connecting portion 13 on the second side L2 in the axial direction. The radially extending portion 412 and the connecting portion 13 are arranged parallel to each other.

In the present embodiment, the second radial support surface 41a is formed on the outer peripheral surface of the tubular support portion 411. The sealing inner peripheral surface 41b is formed on the inner peripheral surface of the tubular support portion 411.

As described above, in the present embodiment, the first support 41 includes the tubular support portion 411 having the tubular shape having the axis along the axial direction L, and the radially extending portion 412 extending to the outer side R2 in the radial direction from the tubular support portion 411.

The second radial support surface 41a is formed on the outer peripheral surface of the tubular support portion 411.

The sealing inner peripheral surface 41b is formed on the inner peripheral surface of the tubular support portion 411.

The radially extending portion 412 and the connecting portion 13 are arranged side by side in the axial direction L.

According to this configuration, the second radial support surface 41a and the sealing inner peripheral surface 41b can appropriately be formed on the first support 41 of the case 4. Since the radially extending portion 412 of the first support 41 and the connecting portion 13 of the first rotary member RT1 (in this case, the input member 1) are arranged side by side in the axial direction L, the arrangement areas of the radially extending portion 412 and the connecting portion 13 in the axial direction L can be reduced easily and, by extension, the dimension of the vehicle drive device 100 in the axial direction L can be reduced easily.

As described above, in the present embodiment, the vehicle drive device 100 further includes the fluid coupling 5 arranged in the power transmission path between the rotary electric machine MG and the transmission 3.

The fluid coupling 5 includes the rotary housing 51 that rotates integrally with the rotor Ro, and the lockup clutch 54 that is the second engagement device CL2.

The second rotary member RT2 is the rotary housing 51 or a member that rotates integrally with the rotary housing 51.

According to this configuration, the support inner peripheral surface 51a can appropriately be formed by using the rotary housing 51 of the fluid coupling 5 or the member that rotates integrally with the rotary housing 51.

In the present embodiment, the rotary housing 51 includes a tubular portion 511 having a tubular shape having an axis along the axial direction L. In the illustrated example, the tubular portion 511 is formed so as to protrude to the second side L2 in the axial direction from the end of a turbine housing portion 520 on the inner side R1 in the radial direction. The turbine housing portion 520 is a portion surrounding an outer side of the turbine runner 53 in the rotary housing 51. In the present embodiment, the support inner peripheral surface 51a is formed on the inner peripheral surface of the tubular portion 511. Further, the rotor support surface 51b is formed on the outer peripheral surface of the tubular portion 511.

As described above, in the present embodiment, the second rotary member RT2 has the rotor support surface 5 1b that is formed so as to face the outer side R2 in the radial direction and supports the rotor Ro from the inner side R1 in the radial direction.

The rotary housing 51 includes the tubular portion 511 having the tubular shape having the axis along the axial direction L.

The support inner peripheral surface 51a is formed on the inner peripheral surface of the tubular portion 511.

The rotor support surface 51b is formed on the outer peripheral surface of the tubular portion 511.

According to this configuration, the rotor Ro of the rotary electric machine MG and the first bearing B1 can be arranged side by side in the radial direction R with the tubular portion 511 of the rotary housing 51 interposed therebetween. Therefore, the dimension of the vehicle drive device 100 in the axial direction L can be reduced easily.

In the present embodiment, the seal member S is arranged so as to overlap, in the radial view along the radial direction R, at least one of the first bearing B1, the second bearing B2, a first support portion SP1, a second support portion SP2, a third support portion SP3, and a fourth support portion SP4. In the illustrated example, the seal member S is arranged so as to overlap the first bearing B1, the first support portion SP1, the second support portion SP2, and the fourth support portion SP4 in the radial view.

The first support portion SP1 is a portion that forms a surface of the first rotary member RT1 in contact with the first bearing B1. As described above, in the present embodiment, the outer tubular portion 11 of the input member 1 that is the first rotary member RT1 has the support outer peripheral surface 11a in contact with the first bearing B1 from the inner side R1 in the radial direction. In the present embodiment, the outer tubular portion 11 has, in addition to the support outer peripheral surface 11a, a first side surface 11b in contact with the first bearing B1 from the first side L1 in the axial direction. Therefore, in the present embodiment, the first support portion SP1 is a portion of the outer tubular portion 11 that forms the support outer peripheral surface 11a and the first side surface 11b. In this case, the portion that forms the support outer peripheral surface 11a and the first side surface 11b is not only an area that extends along the support outer peripheral surface 11a and the first side surface 11b and is in contact with the first bearing B1, but also a portion including the entire area in a thickness direction from the support outer peripheral surface 11a and the first side surface 11b to a surface that faces the opposite side to those for the respective surfaces.

The second support portion SP2 is a portion that forms a surface of the second rotary member RT2 in contact with the first bearing B1. As described above, in the present embodiment, the tubular portion 511 of the rotary housing 51 that is the second rotary member RT2 has the support inner peripheral surface 51a in contact with the first bearing B1 from the outer side R2 in the radial direction. Therefore, in the present embodiment, the second support portion SP2 is a portion of the tubular portion 511 that forms the support inner peripheral surface 51a. In this case, the portion that forms the support inner peripheral surface 51a is not only an area that extends along the support inner peripheral surface 51a and is in contact with the first bearing B1, but also a portion including the entire area in the thickness direction from the support inner peripheral surface 51a to a surface that faces the opposite side to that for this surface.

The third support portion SP3 is a portion that forms a surface of the first rotary member RT1 in contact with the second bearing B2. As described above, in the present embodiment, the first step portion 131 formed on the connecting portion 13 of the input member 1 that is the first rotary member RT1 has the first radial support surface 13a in contact with the second bearing B2 from the outer side R2 in the radial direction. In the present embodiment, the first step portion 131 has, in addition to the first radial support surface 13a, a second side surface 13b in contact with the second bearing B2 from the first side L1 in the axial direction. Therefore, in the present embodiment, the third support portion SP3 is a portion of the first step portion 131 that forms the first radial support surface 13a and the second side surface 13b. In this case, the portion that forms the first radial support surface 13a and the second side surface 13b is not only an area that extends along the first radial support surface 13a and the second side surface 13b and is in contact with the second bearing B2, but also a portion including the entire area in the thickness direction from the first radial support surface 13a and the second side surface 13b to a surface that faces the opposite side to those for the respective surfaces.

The fourth support portion SP4 is a portion that forms a surface of the first support 41 in contact with the second bearing B2. As described above, in the present embodiment, the tubular support portion 411 of the first support 41 has the second radial support surface 41a in contact with the second bearing B2 from the inner side R1 in the radial direction. In the present embodiment, the tubular support portion 411 has, in addition to the second radial support surface 41a, a support side surface 41c in contact with the second bearing B2 from the second side L2 in the axial direction. Therefore, in the present embodiment, the fourth support portion SP4 is a portion of the tubular support portion 411 that forms the second radial support surface 41a and the support side surface 41c. In this case, the portion that forms the second radial support surface 41a and the support side surface 41c is not only an area that extends along the second radial support surface 41a and the support side surface 41c and is in contact with the second bearing B2, but also a portion including the entire area in the thickness direction from the second radial support surface 41a and the support side surface 41c to a surface that faces the opposite side to those for the respective surfaces.

As described above, in the present embodiment, the portion of the first rotary member RT1 (in this case, the input member 1) that forms the surface in contact with the first bearing B1 is defined as the first support portion SP1, the portion of the second rotary member RT2 (in this case, the rotary housing 51) that forms the surface in contact with the first bearing B1 is defined as the second support portion SP2, the portion of the first rotary member RT1 that forms the surface in contact with the second bearing B2 is defined as the third support portion SP3, and the portion of the first support 41 that forms the surface in contact with the second bearing B2 is defined as the fourth support portion SP4.

The seal member S is arranged so as to overlap, in the radial view along the radial direction R, at least one of the first bearing B1, the second bearing B2, the first support portion SP1, the second support portion SP2, the third support portion SP3, and the fourth support portion SP4.

According to this configuration, the dimension of the vehicle drive device 100 in the axial direction L can be reduced compared to a configuration in which the seal member S is arranged on one side in the axial direction L with respect to the first bearing B1, the second bearing B2, the first support portion SP1, the second support portion SP2, the third support portion SP3, and the fourth support portion SP4.

As shown in FIG. 3, in the present embodiment, the disconnecting engagement device 6 serving as the first engagement device CL1 includes a first friction member 61, a first piston portion 62 that presses the first friction member 61 in the axial direction L, and a first hydraulic oil chamber 63 to which oil for operating the first piston portion 62 is supplied.

The first friction member 61 includes a first inner friction material 611 and a first outer friction material 612. The first inner friction material 611 and the first outer friction material 612 both have an annular plate shape, and are arranged such that their rotation axes coincide with each other (coaxially). A plurality of the first inner friction materials 611 and a plurality of the first outer friction materials 612 are provided, and these are arranged alternately along the axial direction L. Either the first inner friction materials 611 or the first outer friction materials 612 may be friction plates and the remaining may be separate plates.

The first outer friction materials 612 are supported from the outer side R2 in the radial direction by a first friction material support portion 14 of the input member 1. The first friction material support portion 14 has a tubular shape having an axis along the axial direction L. In the present embodiment, the first friction material support portion 14 is connected to the outer tubular portion 11 so as to rotate integrally with the outer tubular portion 11. In the illustrated example, the first friction material support portion 14 is formed so as to extend to the first side L1 in the axial direction from the outer tubular portion 11. In the illustrated example, the first friction material support portion 14 is formed integrally with the outer tubular portion 11. In the present embodiment, the first friction material support portion 14 is arranged on the inner side R1 in the radial direction with respect to the tubular portion 511 of the rotary housing 51.

In this example, a plurality of spline grooves extending in the axial direction L is formed in the outer peripheral portions of the first outer friction materials 612 so as to be distributed in the circumferential direction. Similar spline grooves are also formed in the inner peripheral portion of the first friction material support portion 14 so as to be distributed in the circumferential direction. When the spline grooves are engaged with each other, the first outer friction materials 612 are supported by the first friction material support portion 14 from the outer side R2 in the radial direction. In this way, the first outer friction materials 612 are supported so as to be slidable in the axial direction L with their rotation relative to the first friction material support portion 14 being restricted.

The first inner friction materials 611 are supported from the inner side R1 in the radial direction by a second friction material support portion 512 of the rotary housing 51. The second friction material support portion 512 has a tubular shape having an axis along the axial direction L. In the present embodiment, the second friction material support portion 512 is formed by a part of the rotary housing 51 and connected to the tubular portion 511 so as to rotate integrally with the tubular portion 511. In the illustrated example, the second friction material support portion 512 is formed so as to extend to the inner side R1 in the radial direction from the end of the tubular portion 511 on the first side L1 in the axial direction and further extend to the second side L2 in the axial direction.

In this example, a plurality of spline grooves extending in the axial direction L is formed in the inner peripheral portions of the first inner friction materials 611 so as to be distributed in the circumferential direction. Similar spline grooves are also formed in the outer peripheral portion of the second friction material support portion 512 so as to be distributed in the circumferential direction. When the spline grooves are engaged with each other, the first inner friction materials 611 are supported by the second friction material support portion 512 from the inner side R1 in the radial direction. In this way, the first inner friction materials 611 are supported so as to be slidable in the axial direction L with their rotation relative to the second friction material support portion 512 being restricted.

The first piston portion 62 is configured to press the first friction member 61 with a pressure corresponding to a hydraulic pressure supplied to the first hydraulic oil chamber 63. In the present embodiment, the first piston portion 62 includes a first sliding portion 621 and a first pressing portion 622.

In the present embodiment, the connecting portion 13 of the input member 1 includes a second step portion 132 that forms a stepped surface 132a that faces the outer side R2 in the radial direction. In the illustrated example, the second step portion 132 is formed so as to protrude to the first side L1 in the axial direction. The first sliding portion 621 is configured to slide in the axial direction L between the stepped surface 132a of the second step portion 132 and an inner peripheral surface 11c of the outer tubular portion 11 of the input member 1. That is, in the present embodiment, the second step portion 132 and the outer tubular portion 11 form a cylinder portion on which the first sliding portion 621 slides. The first sliding portion 621 has a bottomed double cylinder shape including an annular plate-shaped portion extending along the radial direction R and the circumferential direction, and two tubular portions extending in the axial direction L from the end of the annular plate-shaped portion on the inner side R1 in the radial direction and the end of the annular plate-shaped portion on the outer side R2 in the radial direction.

The first pressing portion 622 presses the first friction member 61 in the axial direction L. In the present embodiment, the first pressing portion 622 is arranged to adjoin the first friction member 61 on the second side L2 in the axial direction. In the illustrated example, the first pressing portion 622 is formed so as to extend from the first sliding portion 621 to the first side L1 in the axial direction and further extend to the outer side R2 in the radial direction.

The first hydraulic oil chamber 63 is arranged to adjoin the first piston portion 62 in the axial direction L. In the present embodiment, the first hydraulic oil chamber 63 is defined by the first sliding portion 621, the outer tubular portion 11, the second step portion 132, and a part of the connecting portion 13 between the outer tubular portion 11 and the second step portion 132.

In the present embodiment, at least one of the first piston portion 62 and the first hydraulic oil chamber 63 is arranged between the first bearing B1 and the second bearing B2 in the radial direction R at a position where the at least one of the first piston portion 62 and the first hydraulic oil chamber 63 overlaps at least one of the first bearing B1 and the second bearing B2 in the radial view along the radial direction R. In the illustrated example, both the first piston portion 62 and the first hydraulic oil chamber 63 are arranged so as to overlap both the first bearing B1 and the second bearing B2 in the radial view.

Thus, in the present embodiment, the first engagement device CL1 (in this case, the disconnecting engagement device 6) that connects or disconnects the power transmission between the input member 1 and the rotary electric machine MG is further provided.

The first engagement device CL1 includes the first friction member 61, the first piston portion 62 that presses the first friction member 61 in the axial direction L, and the first hydraulic oil chamber 63 to which the oil for operating the first piston portion 62 is supplied.

At least one of the first piston portion 62 and the first hydraulic oil chamber 63 is arranged between the first bearing B 1 and the second bearing B2 in the radial direction R at the position where the at least one of the first piston portion 62 and the first hydraulic oil chamber 63 overlaps at least one of the first bearing B1 and the second bearing B2 in the radial view along the radial direction R.

According to this configuration, the dimension of the vehicle drive device 100 in the axial direction L can be reduced compared to a configuration in which both the first piston portion 62 and the first hydraulic oil chamber 63 are arranged on one side in the axial direction L with respect to the first bearing B 1 and the second bearing B2.

In the present embodiment, the first piston portion 62 is arranged between the first bearing B1 and the second bearing B2 in the radial direction R at a position where the first piston portion 62 overlaps at least one of the first bearing B 1 and the second bearing B2 in the radial view along the radial direction R. In the illustrated example, the first piston portion 62 is arranged so as to overlap both the first bearing B1 and the second bearing B2 in the radial view.

According to this configuration, the dimension of the vehicle drive device 100 in the axial direction L can be reduced compared to a configuration in which the first piston portion 62 is arranged on one side in the axial direction L with respect to the first bearing B 1 and the second bearing B2.

In the present embodiment, a first elastic body 64 having an annular shape extending along the circumferential direction and having elasticity in the axial direction L is arranged between a pair of first outer friction materials 612 adj acent to each other in the axial direction Lout of the plurality of first outer friction materials 612. The first elastic body 64 separates the adjacent first outer friction materials 612 away from each other in the axial direction L by its elastic force when the hydraulic pressure supplied to the first hydraulic oil chamber 63 is lower than a predetermined value. As a result, a releasing operation of the disconnecting engagement device 6 is appropriately performed, thereby reducing a drag torque between the friction materials and avoiding a case where the disconnecting engagement device 6 is engaged unintendedly due to a centrifugal hydraulic pressure or the like. For example, a wave spring can be used as the first elastic body 64.

As shown in FIG. 3, in the present embodiment, the lockup clutch 54 serving as the second engagement device CL2 includes a second friction member 55, a second piston portion 56 that presses the second friction member 55 in the axial direction L, and a second hydraulic oil chamber 57 to which oil for operating the second piston portion 56 is supplied.

The second friction member 55 includes a second inner friction material 551 and a second outer friction material 552. The second inner friction material 551 and the second outer friction material 552 both have an annular plate shape, and are arranged such that their rotation axes coincide with each other (coaxially). A plurality of the second inner friction materials 551 and a plurality of the second outer friction materials 552 are provided, and these are arranged alternately along the axial direction L. Either the second inner friction materials 551 or the second outer friction materials 552 may be friction plates and the remaining may be separate plates.

The second outer friction materials 552 are supported from the outer side R2 in the radial direction by the second friction material support portion 512. In this example, a plurality of spline grooves extending in the axial direction L is formed in the outer peripheral portions of the second outer friction materials 552 so as to be distributed in the circumferential direction. Similar spline grooves are also formed in the inner peripheral portion of the second friction material support portion 512 so as to be distributed in the circumferential direction. When the spline grooves are engaged with each other, the second outer friction materials 552 are supported by the second friction material support portion 512 from the outer side R2 in the radial direction. In this way, the second outer friction materials 552 are supported so as to be slidable in the axial direction L with their rotation relative to the second friction material support portion 512 being restricted.

The second inner friction materials 551 are supported by a support member 7. The support member 7 is connected to the turbine runner 53 of the fluid coupling 5 and the transmission input shaft 31 of the transmission 3 so as to rotate integrally with the turbine runner 53 and the transmission input shaft 31. In the present embodiment, the transmission input shaft 31 includes a connecting portion 311 extending to the outer side R2 in the radial direction. The end of the turbine runner 53 on the inner side R1 in the radial direction and the end of the support member 7 on the inner side R1 in the radial direction overlap, in the axial direction L, the end of the connecting portion 311 on the outer side R2 in the radial direction, and these ends are integrally connected.

The support member 7 includes a third friction material support portion 71. The third friction material support portion 71 has a tubular shape having an axis along the axial direction L. The third friction material support portion 71 is formed so as to extend to the second side L2 in the axial direction from a part of the support member 7 connected to the transmission input shaft 31.

In this example, a plurality of spline grooves extending in the axial direction L is formed in the inner peripheral portions of the second inner friction materials 551 so as to be distributed in the circumferential direction. Similar spline grooves are also formed in the outer peripheral portion of the third friction material support portion 71 so as to be distributed in the circumferential direction. When the spline grooves are engaged with each other, the second inner friction materials 551 are supported by the third friction material support portion 71 from the inner side R1 in the radial direction. In this way, the second inner friction materials 551 are supported so as to be slidable in the axial direction L with their rotation relative to the third friction material support portion 71 being restricted.

The second piston portion 56 is configured to press the second friction member 55 with a pressure corresponding to a hydraulic pressure supplied to the second hydraulic oil chamber 57. In the present embodiment, the second piston portion 56 includes a second sliding portion 561 and a second pressing portion 562.

The second sliding portion 561 is configured to slide inside a cylinder portion formed by a cylinder forming portion 513 of the rotary housing 51. The second sliding portion 561 has an annular plate shape extending along the radial direction R and the circumferential direction.

The cylinder forming portion 513 includes an outer peripheral portion 514, an inner peripheral portion 515, and a connecting portion 516. The outer peripheral portion 514 has a tubular shape having an axis along the axial direction L. The inner peripheral portion 515 has a tubular shape having an axis along the axial direction L. The inner peripheral portion 515 is arranged on the inner side R1 in the radial direction with respect to the outer peripheral portion 514. The connecting portion 516 is formed so as to extend along the radial direction R. The connecting portion 516 is formed so as to connect the outer peripheral portion 514 and the inner peripheral portion 515. In the illustrated example, the outer peripheral portion 514 is formed so as to extend to the first side L1 in the axial direction from the end of the connecting portion 516 on the outer side R2 in the radial direction. The inner peripheral portion 515 is formed so as to extend to the first side L1 in the axial direction from the end of the connecting portion 516 on the inner side R1 in the radial direction. The outer peripheral portion 514, the inner peripheral portion 515, and the connecting portion 516 formed as described above form the cylinder portion on which the second sliding portion 561 slides.

The second pressing portion 562 presses the second friction member 55 in the axial direction L. In the present embodiment, the second pressing portion 562 is arranged to adjoin the second friction member 55 on the second side L2 in the axial direction. In the illustrated example, the second pressing portion 562 is formed so as to protrude to the first side L1 in the axial direction from a part of the second sliding portion 561 on the outer side R2 in the radial direction.

The second hydraulic oil chamber 57 is arranged to adjoin the second piston portion 56 in the axial direction L. In the present embodiment, the second hydraulic oil chamber 57 is defined by the second sliding portion 561, the outer peripheral portion 514, the inner peripheral portion 515, and the connecting portion 516.

In the present embodiment, the second sliding portion 561 of the second piston portion 56 is urged to the first side L1 in the axial direction by a plurality of urging members 58 distributed in the circumferential direction. The urging members 58 move the second piston portion 56 away from the second friction member 55 to the first side L1 in the axial direction by its urging force when the hydraulic pressure supplied to the second hydraulic oil chamber 57 is lower than a predetermined value. As a result, a releasing operation of the lockup clutch 54 can appropriately be performed. Further, it is possible to avoid a case where the lockup clutch 54 is engaged unintendedly due to a centrifugal hydraulic pressure or the like. For example, a compression coil spring can be used as the urging member 58.

In the present embodiment, a second elastic body 59 having an annular shape extending along the circumferential direction and having elasticity in the axial direction L is arranged between a pair of second outer friction materials 552 adjacent to each other in the axial direction Lout of the plurality of second outer friction materials 552. The second elastic body 59 separates the adjacent second outer friction materials 552 away from each other in the axial direction L by its elastic force when the hydraulic pressure supplied to the second hydraulic oil chamber 57 is lower than a predetermined value. As a result, a releasing operation of the lockup clutch 54 is appropriately performed, thereby reducing a drag torque between the friction materials and avoiding a case where the lockup clutch 54 is engaged unintendedly due to a centrifugal hydraulic pressure or the like. For example, a wave spring can be used as the second elastic body 59.

In the present embodiment, the lockup clutch 54 is arranged on the inner side R1 in the radial direction with respect to the disconnecting engagement device 6 at a position where the lockup clutch 54 overlaps the disconnecting engagement device 6 in the radial view along the radial direction R. In the illustrated example, the second friction member 55 of the lockup clutch 54 is arranged on the inner side R1 in the radial direction with respect to the first friction member 61 of the disconnecting engagement device 6 at a position where the second friction member 55 overlaps the first friction member 61 in the radial view along the radial direction R. As described above, this structure is realized by the second friction material support portion 512 supporting the first inner friction materials 611 of the first friction member 61 from the inner side R1 in the radial direction and supporting the second outer friction materials 552 of the second friction member 55 from the outer side R2 in the radial direction.

In the present embodiment, the first piston portion 62 and the second hydraulic oil chamber 57 are arranged so as to overlap each other in the radial view along the radial direction R. In the present embodiment, both the disconnecting engagement device 6 and the lockup clutch 54 are arranged on the inner side R1 in the radial direction with respect to the rotor Ro of the rotary electric machine MG at positions where the disconnecting engagement device 6 and the lockup clutch 54 overlap the rotor Ro in the radial view.

Thus, in the present embodiment, the second engagement device CL2 (in this case, the lockup clutch 54) that connects or disconnects the power transmission between the rotary electric machine MG and the transmission 3 is further provided.

The second engagement device CL2 includes the second friction member 55, the second piston portion 56 that presses the second friction member 55 in the axial direction L, and the second hydraulic oil chamber 57 to which the oil for operating the second piston portion 56 is supplied.

The second engagement device CL2 is arranged on the inner side R1 in the radial direction with respect to the first engagement device CL1 (in this case, the disconnecting engagement device 6) at a position where the second engagement device CL2 overlaps the first engagement device CL1 in the radial view along the radial direction R.

The first piston portion 62 and the second hydraulic oil chamber 57 are arranged so as to overlap each other in the radial view.

Both the first engagement device CL1 and the second engagement device CL2 are arranged on the inner side R1 in the radial direction with respect to the rotor Ro at positions where the first engagement device CL1 and the second engagement device CL2 overlap the rotor Ro in the radial view.

According to this configuration, the dimension of the vehicle drive device 100 in the axial direction L can be reduced compared to a configuration in which the second engagement device CL2 is arranged on one side in the axial direction L with respect to the first engagement device CL1.

In the present embodiment, both the first engagement device CL1 (in this case, the disconnecting engagement device 6) and the second engagement device CL2 (in this case, the lockup clutch 54) are arranged on the inner side R1 in the radial direction with respect to the rotary electric machine MG at the positions where the first engagement device CL1 and the second engagement device CL2 overlap the rotary electric machine MG in the radial view along the radial direction R.

According to this configuration, the dimension of the vehicle drive device 100 in the axial direction L can be reduced compared to a configuration in which at least one of the first engagement device CL1 and the second engagement device CL2 is arranged on one side in the axial direction L with respect to the rotary electric machine MG.

In this example, the first engagement device CL1 (in this case, the disconnecting engagement device 6) and the second engagement device CL2 (in this case, the lockup clutch 54) are arranged at the positions where the first engagement device CL1 and the second engagement device CL2 overlap the rotor Ro in the radial view along the radial direction R. In the illustrated example, the entire first engagement device CL1 and the entire second engagement device CL2 are arranged so as to overlap the rotor Ro in the radial view.

According to this configuration, the dimension of the vehicle drive device 100 in the axial direction L can be reduced compared to a configuration in which at least one of the first engagement device CL1 and the second engagement device CL2 is arranged on one side in the axial direction L with respect to the rotor Ro.

### 2. Second Embodiment

Hereinafter, a vehicle drive device 100 according to a second embodiment will be described with reference to the drawings. The present embodiment differs from the first embodiment in that the fourth bearing B4 and the elastic member 10 are not provided and a fixing member 20 and a guide member 30 are provided. In the present embodiment, the support structure for the rotor Ro is different from that in the first embodiment. The differences from the first embodiment will mainly be described below. Points that are not particularly described are the same as those in the first embodiment.

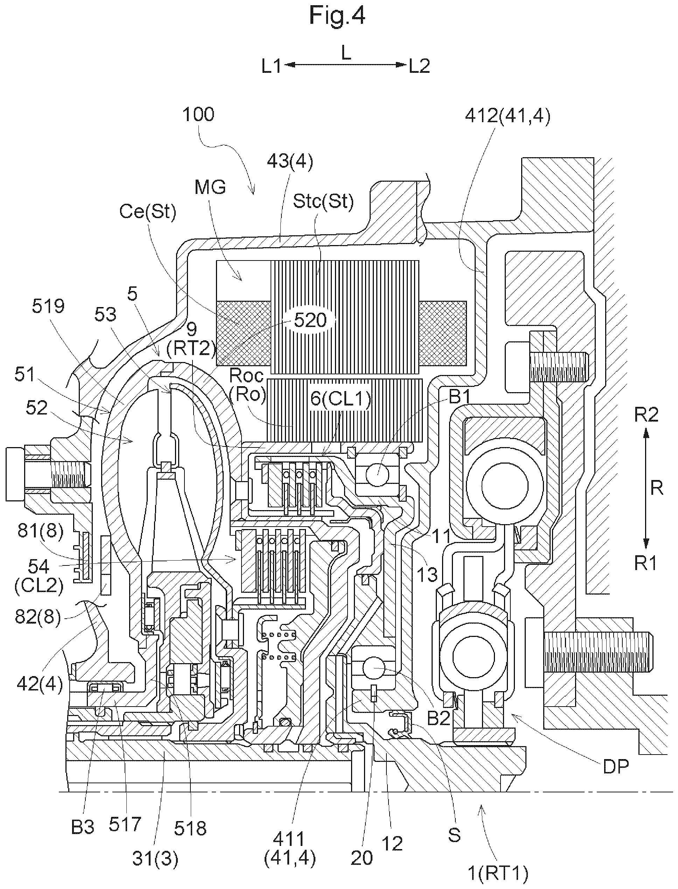

As shown in FIG. 4, in the present embodiment, the fixing member 20 is provided instead of providing the fourth bearing B4 and the elastic member 10. The fixing member 20 is a member that restricts movement of the second bearing B2 in the axial direction L. In the present embodiment, the fixing member 20 restricts movement of the second bearing B2 in the axial direction L relative to the tubular support portion 411 of the first support 41 in the case 4. In the illustrated example, the fixing member 20 is a snap ring having an annular shape and fitted into grooves formed in the inner peripheral surface of the second bearing B2 and the outer peripheral surface of the tubular support portion 411.

Thus, in the present embodiment, the fixing member 20 restricts the movement of the second bearing B2 in the axial direction L relative to the tubular support portion 411 of the first support 41. Therefore, the second bearing B2 hardly detaches from the tubular support portion 411 even if the first support 41 of the case 4 is deformed so as to be displaced in the axial direction L because the dimension of the rotary housing 51 in the axial direction L varies due to, for example, expansion (so-called ballooning) of the rotary housing 51 caused by the hydraulic pressure inside the rotary housing 51.

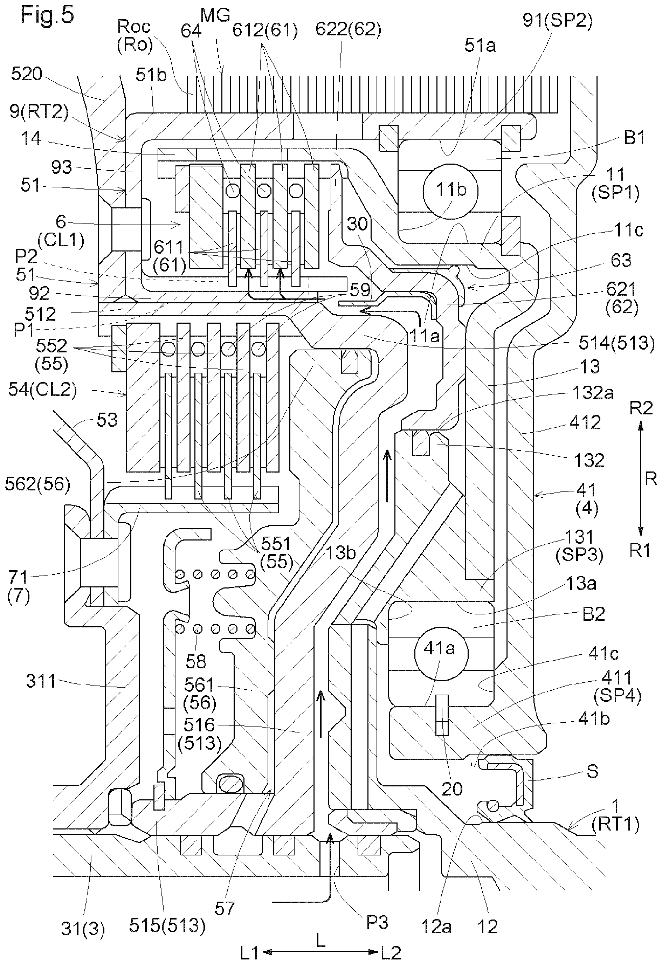

In the present embodiment, the rotary housing 51 does not have the tubular portion 511. A rotor support member 9 is connected to the rotary housing 51 so as to rotate integrally with the rotary housing 51. The rotor support member 9 is a member that supports the rotor Ro from the inner side R1 in the radial direction. In the present embodiment, the rotor support member 9 functions as the second rotary member RT2. As shown in FIG. 5, in the present embodiment, the rotor support member 9 includes an outer peripheral support portion 91, an inner peripheral support portion 92, and a fixing portion 93.

The outer peripheral support portion 91 has a tubular shape having an axis along the axial direction L. In the present embodiment, the rotor support surface 51b is formed on the outer peripheral surface of the outer peripheral support portion 91. The support inner peripheral surface 51a is formed on the inner peripheral surface of the outer peripheral support portion 91. Therefore, in the present embodiment, a part of the outer peripheral support portion 91 function as the second support portion SP2 that forms the surface of the second rotary member RT2 (in this case, the rotor support member 9) in contact with the first bearing B1.

The inner peripheral support portion 92 has a tubular shape having an axis along the axial direction L. The inner peripheral support portion 92 is arranged on the inner side R1 in the radial direction with respect to the outer peripheral support portion 91. In the present embodiment, the second friction material support portion 512 does not support the first inner friction materials 611, and the inner peripheral support portion 92 supports the first inner friction materials 611 from the inner side R1 in the radial direction. In this example, a plurality of spline grooves engaged with the plurality of spline grooves formed in the inner peripheral portions of the first inner friction materials 611 is formed in the outer peripheral portion of the inner peripheral support portion 92 so as to extend in the axial direction L and to be distributed in the circumferential direction. When the spline grooves of the first inner friction materials 611 and the spline grooves of the inner peripheral support portion 92 are engaged with each other, the first inner friction materials 611 are supported so as to be slidable in the axial direction L with their rotation relative to the inner peripheral support portion 92 being restricted. In the present embodiment, the second friction material support portion 512 is formed so as to extend to the second side L2 in the axial direction from the turbine housing portion 520 of the rotary housing 51. The second friction material support portion 512 is connected to the turbine housing portion 520 so as to rotate integrally with the turbine housing portion 520. In this example, the turbine housing portion 520 extends up to the inner side R1 in the radial direction with respect to the first friction member 61 of the disconnecting engagement device 6, and the end of the turbine housing portion 520 on the inner side R1 in the radial direction and the end of the second friction material support portion 512 on the first side L1 in the axial direction are connected by welding.

The fixing portion 93 is connected to the turbine housing portion 520 so as to rotate integrally with the turbine housing portion 520. In the illustrated example, the fixing portion 93 is connected to the turbine housing portion 520 with rivets while being in abutment against the turbine housing portion 520 from the second side L2 in the axial direction. The fixing portion 93 extends along the radial direction R so as to connect the outer peripheral support portion 91 and the inner peripheral support portion 92. In the present embodiment, the fixing portion 93 is formed so as to connect the end of the outer peripheral support portion 91 on the first side L1 in the axial direction and the end of the inner peripheral support portion 92 on the first side L1 in the axial direction.

In the present embodiment, an oil passage P1 is formed between the inner peripheral support portion 92 and the second friction material support portion 512 in the radial direction R. In this example, a plurality of spline grooves engaged with the plurality of spline grooves formed in the outer peripheral portion of the second friction material support portion 512 is formed in the inner peripheral portion of the inner peripheral support portion 92 so as to extend in the axial direction L and to be distributed in the circumferential direction. The oil passage P1 is formed between the spline grooves of the second friction material support portion 512 and the spline grooves of the inner peripheral support portion 92. Although illustration is omitted, in the present embodiment, a through hole P2 extending through the inner peripheral support portion 92 in the radial direction R is formed so as to communicate with the oil passage P1. As a result, oil supplied to the oil passage P1 flows to the first friction member 61 of the disconnecting engagement device 6 through the through hole P2 in the inner peripheral support portion 92. Thus, the first friction member 61 can be lubricated appropriately.

In the present embodiment, the guide member 30 is provided to guide the oil to the oil passage P1. In the present embodiment, the guide member 30 has a tubular shape having an axis along the axial direction L so as to extend from the first piston portion 62 toward the oil passage P1. In the illustrated example, the guide member 30 is connected to the first sliding portion 621 of the first piston portion 62 so as to rotate integrally with the first sliding portion 621 while being in contact with, from the inner side R1 in the radial direction, a part of the first sliding portion 621 that extends along the axial direction L. In the present embodiment, along with rotation of the transmission input shaft 31 having a tubular shape having an axis along the axial direction L, the oil is supplied to a space between the cylinder forming portion 513 of the rotary housing 51 and each of the connecting portion 13 of the input member 1 and the first piston portion 62 from the inside of the transmission input shaft 31 through a radial communication hole P3. Then, the oil flows through the space between the cylinder forming portion 513 and each of the connecting portion 13 and the first piston portion 62 to the outer side R2 in the radial direction, and reaches the guide member 30. The oil that has reached the guide member 30 flows along the inner peripheral surface of the guide member 30 to the first side L1 in the axial direction, and is supplied to the oil passage P1 formed between the inner peripheral support portion 92 and the second friction material support portion 512 in the radial direction R.

Although illustration and description are omitted in the first embodiment, as shown in FIG. 4, the vehicle drive device 100 includes a rotation sensor 8 that detects the rotation of the rotor Ro of the rotary electric machine MG. In the present embodiment, the rotation sensor 8 includes a fixed body 81 and a rotary body 82.

The fixed body 81 is fixed to the case 4. In the present embodiment, the fixed body 81 is supported by the second support 42 of the case 4. The rotary body 82 is connected to the rotor Ro or the member that rotates integrally with the rotor Ro so as to rotate integrally with the rotor Ro or the member. In the present embodiment, the rotary body 82 is connected to the rotary housing 51 so as to rotate integrally with the rotary housing 51.

In the present embodiment, the rotary body 82 has an annular plate shape, and has a plurality of teeth distributed in the circumferential direction. The fixed body 81 detects the plurality of teeth of the rotary body 82 as a detection target, and outputs a signal based on the detection target. In the illustrated example, the plurality of teeth is formed on the inner peripheral portion of the rotary body 82. The outer peripheral portion of the rotary body 82 is supported by the pump housing portion 519 of the rotary housing 51. In the illustrated example, the pump housing portion 519 has a shape that bulges to the first side L1 in the axial direction with respect to the radially extending portion 518, and the rotary body 82 is arranged on the inner side R1 in the radial direction with respect to the pump housing portion 519 at a position where the rotary body 82 overlaps the pump housing portion 519 in the radial view along the radial direction R. The fixed body 81 is arranged so as to face the rotary body 82 from the first side L1 in the axial direction.

In this example, an inductive sensor (inductive proximity sensor) is used as the rotation sensor 8. The type of the rotation sensor 8 is not limited to the above. The rotation sensor 8 may be provided by using various sensors such as a resolver, a Hall element sensor, an encoder, and a magnetic rotation sensor.

### 3. Other Embodiments

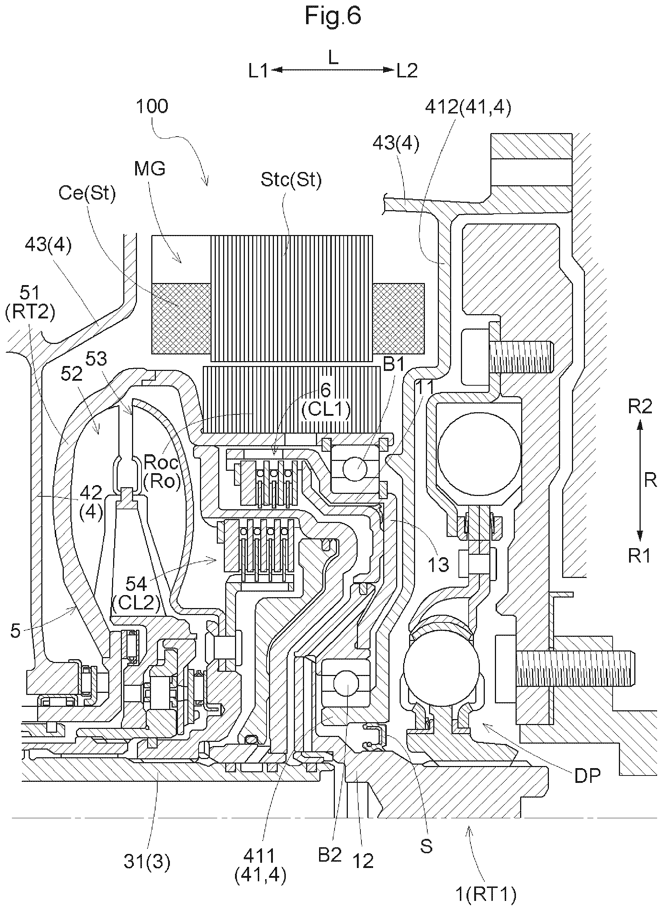

(1) In the first embodiment, description has been given of the exemplary configuration in which the seal member S is arranged between the tubular support portion 411 of the first support 41 in the case 4 and the inner tubular portion 12 of the input member 1 in the radial direction R. The size of the space between the tubular support portion 411 and the inner tubular portion 12 in the radial direction R where the seal member S is arranged is not particularly limited. For example, as shown in FIG. 6, the distance in the radial direction R between the tubular support portion 411 and the inner tubular portion 12 may be larger than that in the first embodiment. The seal member S used in this case has a larger thickness in the radial direction R (difference between the outside diameter and the bore diameter) than that in the first embodiment. In the example shown in FIG. 6, the seal member S is arranged so as to overlap the second bearing B2 in the radial view.
(2) In the above embodiments, description has been given of the exemplary configuration in which the first radial support surface 13a is formed so as to face the inner side R1 in the radial direction and the second radial support surface 41a is formed so as to face the outer side R2 in the radial direction. However, the present invention is not limited to such a configuration. The first radial support surface 13a may be formed so as to face the outer side R2 in the radial direction, and the second radial support surface 41a may be formed so as to face the inner side R1 in the radial direction.
(3) In the above embodiments, description has been given of the exemplary configuration in which the first bearing B1 and the second bearing B2 are arranged so as to overlap each other in the radial view along the radial direction R. However, the present invention is not limited to such a configuration. The first bearing B1 may be arranged on one side in the axial direction L with respect to the second bearing B2.
(4) In the above embodiments, description has been given of the exemplary configuration in which the input member 1 includes the outer tubular portion 11, the inner tubular portion 12, and the connecting portion 13, the support outer peripheral surface 11a is formed on the outer tubular portion 11, the sealing outer peripheral surface 12a is formed on the inner tubular portion 12, and the first radial support surface 13a is formed on the connecting portion 13. However, the present invention is not limited to such a configuration. For example, the input member 1 need not include the outer tubular portion 11, and the support outer peripheral surface 11a may be formed on the connecting portion 13.
(5) In the above embodiments, description has been given of the exemplary configuration in which the first support 41 of the case 4 includes the tubular support portion 411 and the radially extending portion 412 and both the second radial support surface 41a and the sealing inner peripheral surface 41b are formed on the tubular support portion 411. However, the present invention is not limited to such a configuration. For example, the first support 41 may further include an inner tubular support portion having a tubular shape and arranged on the inner side R1 in the radial direction with respect to the tubular support portion 411, the sealing inner peripheral surface 41b may be formed on the inner tubular support portion, and the second radial support surface 41a may be formed on the tubular support portion 411.
(6) In the second embodiment, description has been given of the exemplary configuration in which the rotor support member 9 functioning as the second rotary member RT2 is connected to the rotary housing 51 of the fluid coupling 5 so as to rotate integrally with the rotary housing 51. However, the present invention is not limited to such a configuration. For example, the fluid coupling 5 need not be provided, and the rotor support member 9 may drivingly be connected to the transmission input shaft 31 via the second engagement device CL2.
(7) In the above embodiments, description has been given of the exemplary configuration in which at least one of the first piston portion 62 and the first hydraulic oil chamber 63 of the disconnecting engagement device 6 is arranged between the first bearing B1 and the second bearing B2 in the radial direction R at the position where the at least one of the first piston portion 62 and the first hydraulic oil chamber 63 overlaps at least one of the first bearing B1 and the second bearing B2 in the radial view along the radial direction R. However, the present invention is not limited to such a configuration. Both the first piston portion 62 and the first hydraulic oil chamber 63 may be arranged so as to overlap neither the first bearing B1 nor the second bearing B2 in the radial view.
(8) In the above embodiments, description has been given of the exemplary configuration in which the first piston portion 62 of the disconnecting engagement device 6 is arranged between the first bearing B1 and the second bearing B2 in the radial direction R at the position where the first piston portion 62 overlaps at least one of the first bearing B 1 and the second bearing B2 in the radial view along the radial direction R. However, the present invention is not limited to such a configuration. The first piston portion 62 may be arranged so as to overlap neither the first bearing B1 nor the second bearing B2 in the radial view.
(9) In the above embodiments, description has been given of the exemplary configuration in which the lockup clutch 54 serving as the second engagement device CL2 is arranged on the inner side R1 in the radial direction with respect to the disconnecting engagement device 6 serving as the first engagement device CL1 at the position where the lockup clutch 54 overlaps the disconnecting engagement device 6 in the radial view along the radial direction R. However, the present invention is not limited to such a configuration. The second engagement device CL2 may be arranged on one side in the axial direction L with respect to the first engagement device CL1.
(10) In the above embodiments, description has been given of the exemplary configuration in which both the disconnecting engagement device 6 serving as the first engagement device CL1 and the lockup clutch 54 serving as the second engagement device CL2 are arranged on the inner side R1 in the radial direction with respect to the rotor Ro of the rotary electric machine MG at the positions where the disconnecting engagement device 6 and the lockup clutch 54 overlap the rotor Ro in the radial view along the radial direction R. However, the present invention is not limited to such a configuration. For example, only one of the first engagement device CL1 and the second engagement device CL2 may be arranged at a position where the engagement device overlaps the rotor Ro in the radial view. Both the first engagement device CL1 and the second engagement device CL2 may be arranged so as not to overlap the rotor Ro but overlap the stator St in the radial view along the radial direction R. Alternatively, both the first engagement device CL1 and the second engagement device CL2 may be arranged so as not to overlap the rotary electric machine MG in the radial view along the radial direction R.
(11) In the above embodiments, description has been given of the exemplary configuration in which both the first bearing B1 and the second bearing B2 are arranged on the inner side R1 in the radial direction with respect to the rotor Ro of the rotary electric machine MG at the positions where the first bearing B1 and the second bearing B2 overlap the rotor Ro in the radial view along the radial direction R. However, the present invention is not limited to such a configuration. For example, only the first bearing B1 may be arranged at a position where the first bearing B1 overlaps the rotor Ro in the radial view, and the second bearing B2 may be arranged at a position where the second bearing B2 does not overlap the rotor Ro in the radial view. In this case, the second bearing B2 may be arranged so as not to overlap the rotor Ro but overlap the stator St in the radial view. Alternatively, the second bearing B2 may be arranged so as not to overlap the rotary electric machine MG in the radial view.
(12) The configurations disclosed in the above embodiments can be applied in combination with the configurations disclosed in other embodiments as long as there is no contradiction. Regarding the other configurations, the embodiments disclosed herein are merely exemplary in all respects. Thus, various modifications can be made as appropriate without departing from the scope of the present disclosure.

### [Summary of Embodiments]

Hereinafter, the outline of the vehicle drive device (100) described above will be described.

A vehicle drive device (100) includes:
an input member (1) drivingly connected to an internal combustion engine (EG);
an output member (2) drivingly connected to a wheel (W);
a rotary electric machine (MG) including a rotor (Ro) and functioning as a driving force source for the wheel (W);
a transmission (3) configured to change a speed of rotation transmitted from the rotary electric machine (MG) side and transmit the rotation to the output member (2) side; and
a case (4) that houses the rotary electric machine (MG) and the transmission (3), in which
the input member (1) or a member that rotates integrally with the input member (1) is defined as a first rotary member (RT1), and the rotor (Ro) or a member that rotates integrally with the rotor (Ro) is defined as a second rotary member (RT2),
the vehicle drive device (100) includes:
   a first bearing (B 1) that supports the second rotary member (RT2) on the first rotary member (RT1) so that the second rotary member (RT2) rotates relative to the first rotary member (RT1); and
a second bearing (B2) that supports the first rotary member (RT1) on the case (4) so that the first rotary member (RT1) rotates relative to the case (4),
the case (4) includes a support (41) that supports the second bearing (B2),
the first rotary member (RT1) has a support outer peripheral surface (11a) that faces an outer side (R2) in a radial direction (R), and a first radial support surface (13a) that faces one side in the radial direction (R),
the second rotary member (RT2) has a support inner peripheral surface (51a) that faces an inner side (R1) in the radial direction (R),
the support (41) has a second radial support surface (41a) that faces the first radial support surface (13a) in the radial direction (R),
the first bearing (B1) is arranged between the support outer peripheral surface (11a) and the support inner peripheral surface (51a) in the radial direction (R),
the second bearing (B2) is arranged between the first radial support surface (13a) and the second radial support surface (41a) in the radial direction (R), and
the first bearing (B 1) is arranged on the inner side (R1) in the radial direction (R) with respect to the rotor (Ro) at a position where the first bearing (B 1) overlaps the rotor (Ro) in a radial view along the radial direction (R).

According to this configuration, the second rotary member (RT2) is supported so as to be rotatable relative to the case (4) via the first bearing (B 1), the first rotary member (RT1), and the second bearing (B2). Therefore, the second radial support surface (41a) for supporting the second bearing (B2) is formed on the case (4), whereas a surface for supporting the first bearing (B 1) is not formed on the case (4). The support outer peripheral surface (1 1a) for supporting the first bearing (B 1) is formed on the first rotary member (RT1). Thus, it is possible to avoid a configuration in which a portion for supporting the first bearing (B 1) and a portion for supporting the second bearing (B2) are arranged side by side in the radial direction (R) on the case (4). As a result, it is easy to reduce the dimension of the vehicle drive device in the radial direction (R).

It is preferable that both the first bearing (B 1) and the second bearing (B2) be arranged on the inner side (R1) in the radial direction (R) with respect to the rotor (Ro) at positions where the first bearing (B 1) and the second bearing (B2) overlap the rotor (Ro) in the radial view, and
it is preferable that the first bearing (B 1) and the second bearing (B2) be arranged so as to overlap each other in the radial view.

According to this configuration, the dimension of the vehicle drive device (100) in the axial direction (L) can be reduced compared to a configuration in which the first bearing (B 1) and the second bearing (B2) are arranged side by side in the axial direction (L).

It is preferable that the vehicle drive device (100) further include a first engagement device (CL1) configured to connect or disconnect power transmission between the input member (1) and the rotary electric machine (MG),
it is preferable that the first engagement device (CL1) include a first friction member (61), a first piston portion (62) configured to press the first friction member (61) in the axial direction (L), and a first hydraulic oil chamber (63) to which oil for operating the first piston portion (62) is supplied, and
it is preferable that at least one of the first piston portion (62) and the first hydraulic oil chamber (63) be arranged between the first bearing (B 1) and the second bearing (B2) in the radial direction (R) at a position where the at least one of the first piston portion (62) and the first hydraulic oil chamber (63) overlaps at least one of the first bearing (B 1) and the second bearing (B2) in the radial view.

According to this configuration, the dimension of the vehicle drive device (100) in the axial direction (L) can be reduced compared to a configuration in which both the first piston portion (62) and the first hydraulic oil chamber (63) are arranged on one side in the axial direction (L) with respect to the first bearing (B1) and the second bearing (B2).

In the configuration including the first engagement device (CL1),
it is preferable that the vehicle drive device (100) further include a second engagement device (CL2) configured to connect or disconnect power transmission between the rotary electric machine (MG) and the transmission (3),
it is preferable that the second engagement device (CL2) include a second friction member (55), a second piston portion (56) configured to press the second friction member (55) in the axial direction (L), and a second hydraulic oil chamber (57) to which oil for operating the second piston portion (56) is supplied,
it is preferable that the second engagement device (CL2) be arranged on the inner side (R1) in the radial direction (R) with respect to the first engagement device (CL1) at a position where the second engagement device (CL2) overlaps the first engagement device (CL1) in the radial view,
it is preferable that the first piston portion (62) and the second hydraulic oil chamber (57) be arranged so as to overlap each other in the radial view, and
it is preferable that both the first engagement device (CL1) and the second engagement device (CL2) be arranged on the inner side (R1) in the radial direction (R) with respect to the rotor (Ro) at positions where the first engagement device (CL1) and the second engagement device (CL2) overlap the rotor (Ro) in the radial view.

According to this configuration, the dimension of the vehicle drive device (100) in the axial direction (L) can be reduced compared to a configuration in which the second engagement device (CL2) is arranged on one side in the axial direction (L) with respect to the first engagement device (CL1).

In the configuration including the first engagement device (CL1) and the second engagement device (CL2),
it is preferable that the vehicle drive device (100) further include a fluid coupling (5) arranged in a power transmission path between the rotary electric machine (MG) and the transmission (3),
it is preferable that the fluid coupling (5) include a rotary housing (51) configured to rotate integrally with the rotor (Ro), and a lockup clutch (54) that is the second engagement device (CL2), and
it is preferable that the second rotary member (RT2) be the rotary housing (51) or a member that rotates integrally with the rotary housing (51).

According to this configuration, the support inner peripheral surface (51a) can appropriately be formed by using the rotary housing (51) of the fluid coupling (5) or the member that rotates integrally with the rotary housing (51).

It is preferable that the first radial support surface (13a) be formed so as to face the inner side (R1) in the radial direction (R), and
it is preferable that the second radial support surface (41a) be formed so as to face the outer side (R2) in the radial direction (R).

According to this configuration, a space for arranging a member between the first rotary member (RT1) and the first support (41) in the radial direction (R) can easily be secured on the inner side (R1) in the radial direction with respect to the second radial support surface (41a) of the first support (41) in the case (4). That is, the configuration is such that the member to be arranged between the first rotary member (RT1) and the first support (41) in the radial direction (R) can easily be arranged on one side in the radial direction (R) with respect to the first bearing (B1) and the second bearing (B2). As a result, the dimension of the vehicle drive device (100) in the axial direction (L) can easily be reduced even in a case where a predetermined member is arranged between the first rotary member (RT1) and the first support (41) in the radial direction (R).

### INDUSTRIAL APPLICABILITY

The technology according to the present disclosure is applicable to a vehicle drive device including an input member drivingly connected to an internal combustion engine, an output member drivingly connected to wheels, a rotary electric machine that functions as a driving force source for the wheels, a transmission that changes the speed of rotation transmitted from the rotary electric machine side and transmits the rotation to the output member side, and a case that houses the rotary electric machine and the transmission.

### Description of the Reference Numerals

100: vehicle drive device, 1: input member, 11a: support outer peripheral surface, 13a: first radial support surface, 2: output member, 3: transmission, 4: case, 41: first support (support), 41a: second radial support surface, 51a: support inner peripheral surface, RT1: first rotary member, RT2: second rotary member, B1: first bearing, B2: second bearing, MG: rotary electric machine, Ro: rotor, EG: internal combustion engine, W: wheel, R: radial direction, R1: inner side in radial direction, R2: outer side in radial direction

## Claims

1. A vehicle drive device comprising:
an input member drivingly connected to an internal combustion engine;
an output member drivingly connected to a wheel;
a rotary electric machine including a rotor and functioning as a driving force source for the wheel;
a transmission configured to change a speed of rotation transmitted from the rotary electric machine side and transmit the rotation to the output member side; and
a case that houses the rotary electric machine and the transmission, wherein
the input member or a member that rotates integrally with the input member is defined as a first rotary member, and the rotor or a member that rotates integrally with the rotor is defined as a second rotary member,
the vehicle drive device includes:
a first bearing that supports the second rotary member on the first rotary member so that the second rotary member rotates relative to the first rotary member; and
a second bearing that supports the first rotary member on the case so that the first rotary member rotates relative to the case,
the case includes a support that supports the second bearing,
the first rotary member has a support outer peripheral surface that faces an outer side in a radial direction, and a first radial support surface that faces one side in the radial direction,
the second rotary member has a support inner peripheral surface that faces an inner side in the radial direction,
the support has a second radial support surface that faces the first radial support surface in the radial direction,
the first bearing is arranged between the support outer peripheral surface and the support inner peripheral surface in the radial direction,
the second bearing is arranged between the first radial support surface and the second radial support surface in the radial direction, and
the first bearing is arranged on the inner side in the radial direction with respect to the rotor at a position where the first bearing overlaps the rotor in a radial view along the radial direction.

2. The vehicle drive device according to claim 1, wherein
both the first bearing and the second bearing are arranged on the inner side in the radial direction with respect to the rotor at positions where the first bearing and the second bearing overlap the rotor in the radial view, and
the first bearing and the second bearing are arranged so as to overlap each other in the radial view.

3. The vehicle drive device according to claim 1 or 2,
further comprising a first engagement device configured to connect or disconnect power transmission between the input member and the rotary electric machine, wherein
the first engagement device includes a first friction member, a first piston portion configured to press the first friction member in an axial direction, and a first hydraulic oil chamber to which oil for operating the first piston portion is supplied, and
at least one of the first piston portion and the first hydraulic oil chamber is arranged between the first bearing and the second bearing in the radial direction at a position where the at least one of the first piston portion and the first hydraulic oil chamber overlaps at least one of the first bearing and the second bearing in the radial view.

4. The vehicle drive device according to claim 3,
further comprising a second engagement device configured to connect or disconnect power transmission between the rotary electric machine and the transmission, wherein
the second engagement device includes a second friction member, a second piston portion configured to press the second friction member in the axial direction, and a second hydraulic oil chamber to which oil for operating the second piston portion is supplied,
the second engagement device is arranged on the inner side in the radial direction with respect to the first engagement device at a position where the second engagement device overlaps the first engagement device in the radial view,
the first piston portion and the second hydraulic oil chamber are arranged so as to overlap each other in the radial view, and
both the first engagement device and the second engagement device are arranged on the inner side in the radial direction with respect to the rotor at positions where the first engagement device and the second engagement device overlap the rotor in the radial view.

5. The vehicle drive device according to claim 4,
further comprising a fluid coupling arranged in a power transmission path between the rotary electric machine and the transmission, wherein
the fluid coupling includes a rotary housing configured to rotate integrally with the rotor, and a lockup clutch that is the second engagement device, and
the second rotary member is the rotary housing or a member that rotates integrally with the rotary housing.

6. The vehicle drive device according to any one of claims 1 to 5, wherein
the first radial support surface is formed so as to face the inner side in the radial direction, and
the second radial support surface is formed so as to face the outer side in the radial direction.
